(19) Europäisches Patentamt
European Patent Office
Office européen des brevets

(11) Veröffentlichungsnummer : **0 290 591 B1**

(12) # EUROPÄISCHE PATENTSCHRIFT

(45) Veröffentlichungstag der Patentschrift :
**13.03.91 Patentblatt 91/11**

(51) Int. Cl.$^5$ : **C08F 8/30**, C09K 19/38

(21) Anmeldenummer : **88900217.6**

(22) Anmeldetag : **26.11.87**

(86) Internationale Anmeldenummer :
**PCT/EP87/00731**

(87) Internationale Veröffentlichungsnummer :
**WO 88/04305 16.06.88 Gazette 88/13**

(54) **MATERIALIEN MIT STICKSTOFFHALTIGEN SECHSRINGEN.**

(30) Priorität : **01.12.86 DE 3641024**

(43) Veröffentlichungstag der Anmeldung :
**17.11.88 Patentblatt 88/46**

(45) Bekanntmachung des Hinweises auf die Patenterteilung :
**13.03.91 Patentblatt 91/11**

(84) Benannte Vertragsstaaten :
**CH DE FR GB IT LI NL**

(56) Entgegenhaltungen :
**EP-A- 172 012**
**EP-A- 195 122**
**FR-A- 1 067 960**
**FR-A- 2 255 322**
**US-A- 4 195 128**

(73) Patentinhaber : **MERCK PATENT GESELLSCHAFT MIT BESCHRÄNKTER HAFTUNG**
**Frankfurter Strasse 250 Postfach 4119**
**W-6100 Darmstadt (DE)**

(72) Erfinder : **DORSCH, Dieter**
**Reuterallee 24**
**W-6100 Darmstadt (DE)**
Erfinder : **EIDENSCHINK, Rudolf**
**Konrad-Adenauer-Str. 1**
**W-6109 Mühltal (DE)**
Erfinder : **RIEGER, Bernhard**
**Südring 31**
**W-6102 Pfungstadt (DE)**
Erfinder : **MAROWSKY, Gerd**
**Mühlspielweg 19**
**W-3400 Göttingen (DE)**

**EP 0 290 591 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft neue Materialien mit stickstoffhaltigen Sechsringen sowie deren Verwendung als nichtlinear optische Medien.

Die nichtlineare Optik beschäftigt sich mit der Wechselwirkung elektromagnetischer Felder in verschiedenen Medien und dem damit verbundenen Entstehen neuer Felder mit veränderten Eigenschaften. Materialien mit nichtlinear optischen Eigenschaften besitzen eine feldstärkeabhängige dielektrische Suszeptibilität 2. Ordnung, die eine Reihe dispersiver Prozesse zur Folge hat : die Frequenzverdopplung (second harmonic generation = SHG) erlaubt die Erzeugung von Licht der verglichen mit dem eingestrahlten Licht halben Wellenlänge; der elektrooptische Effekt (Pockels-Effekt) ermöglicht eine Änderung des Brechungsindex bei angelegtem elektrischem Feld ; Methoden der Summen- und Differenzfrequenzmischung sowie der Frequenzteilung gestatten die kontinuierliche Abstimmung von Laserlicht.

Eine Vielzahl technischer Anwendungen resultiert aus den voranstehend angeführten Effekten. Elektrooptische Schalter, die Frequenz- und Intensitätssteuerung in der Lasertechnik, Holographie sowie die Bereiche der Informationsverarbeitung und integrierten Optik stellen Einsatzgebiete für Materialien mit nichtlinear optischen Eigenschaften 2. Ordnung dar.

Materialien mit elektrischen Suszeptibilitätsfunktionen 3. Ordnung eignen sich zur Herstellung rein-optischer Schalter und damit als Wellenleiter zur Konstruktion rein-optischer Computer.

Um für die Anwendung im Bereich der nichtlinearen Optik 2. Ordnung geeignet zu sein, müssen derartige Materialien einer Reihe von Anforderungen genügen.

Neben einer nicht-zentrosymmetrischen Molekülanordnung im Kristall bedingt eine technische Brauchbarkeit möglichst hohe Werte für die dielektrische Suszeptibilität $X^{(2)}$.

Eine Reihe anorganischer Substanzen wie z.B. Kaliumdihydrogenphosphat oder Lithiumniobat zeigt nichtlinear optische Eigenschaften. Alle diese Verbindungen sind jedoch mit den verschiedensten Nachteilen behaftet. Neben unzureichenden Werten für die dielektrische Suszeptibilität zweiter Ordnung mangelt es anorganischen Verbindungen häufig an einer genügenden Photostabilität bei der Behandlung mit hohen Lichtintensitäten, oder sie sind nur schwierig herzustellen und zu verarbeiten.

Aus Garito et al., Laser Focus 18 (1982) und der EP-0091 838 sind organische Verbindungen vom Nitroanilintyp bekannt. Ihre verhältnismäßig guten Werte für die photochemische Stabilität und die dielektrische Suszeptibilität zweiter Ordnung gehen jedoch einher mit einer schlechten Kristallisierbarkeit und einer mangelhaften mechanischen Stabilität. Insbesondere die Herstellung dünner Schichten, wie von der integrierten Optik gefordert, gelingt mit diesen Materialien nicht.

Von B.L. Davydov et al./Zh.Prikl.Spektrosk. 20, 516 (1974) wurden Pulveruntersuchungen an einigen durch OH, $NH_2$, F, J oder Phenyl substituierten Pyrimidinen vorgenommen. In der japanischen Auslegeschrift J 61-078 748 werden unter anderem auch Pyridinringe enthaltende Diolefine mit Carbonylgruppen als Pulver untersucht. Die Materialien zeigen teilweise schlechte nichtlineare Suszeptibilitäten und werden wie die in der EP 0 031 282-B1 offenbarten Pyridin-N-oxiden den an eine wirtschaftliche Verwendung als nichtlinear optische Materialien gestellten Anforderungen nur unzureichend gerecht.

Polymere zeichnen sich durch hohe mechanische Widerstandsfähigkeit und gute chemische Stabilität aus. Am Polymergerüst befestigte oder in Polymeren gelöste Moleküle mit nichtlinear optischen Eigenschaften sollten daher in der nichtzentrosymmetrischen Umgebung vorteilhafte Werte für die dielektrische Suszeptibilität aufweisen.

Polymere mit Nichtlinearitäten zweiter Ordnung lassen sich herstellen, indem an über die Glastemperatur erhitzte, mit statistisch orientierten Molekülen dotierte Filme ein äußeres Feld angelegt wird. Dies führt zu einer Polung der eingelagerten Moleküle, die dem Polymermedium nach dessen Erstarren eine Anisotropie verleiht. Auf diese Weise hergestellte Polymere mit nichtlinear optischen Eigenschaften, in denen p,p'-Dimethylaminonitrostilben als Wirtsmolekül Verwendung findet, wurden von Meredith et al., Macromolecules 15 (1982) 1385 beschrieben.

Die US-Patentschrift 4 412 059 offenbart ein Polymermaterial mit cholesterischen Mesophasen, die mittels elektrischer oder magnetischer Felder einer kontrollierten Ausrichtung zugänglich sind. Schließlich sind aus der EP-0172012 vollaromatische, thermotrope, flüssigkristalline Polymere bekannt, deren nichtlinear optische Eigenschaften ebenfalls durch äußere Felder hervorgerufen werden können.

Eine weitere Methode zur Erzeugung von Polymermaterialien mit nichtlinear optischen Eigenschaften besteht in der Polymerisation von bereits geordneten, eine nicht-zentrosymmetrische Orientierung aufweisenden Monomeren, wobei der Ordnungszustand des Systems während der Polymerisation weitgehend erhalten bleibt. Für diese Technik geeignete Monomere sind beispielsweise der EP-0021695 zu entnehmen.

A.C. Griffin et al, 11. Int. LC-Konf., Berkeley 1986, beschreibt Polyester mit nichtlinear optische Eigenschaften besitzenden Seitenketten.

Schließlich ist es nach den japanischen Auslegeschriften J 60-152 509-1, J 61-137 136, J 61-148 433 und J 61-167 930 möglich, nichtlinear optische Eigenschaften vermittelnde Seitenketten am bereits fertigen Polymergerüst aufzubauen.

Aus dem Stand der Technik sind zum einen nur wenige für nichtlinear optische Prozesse geeignete Polymermaterialien bekannt und zum anderen weisen viele Verfahren zu ihrer Herstellung eine Reihe von Nachteilen auf.

So lassen sich beispielsweise bei der Dotierung von Polymeren mit niedermolekularen Substanzen oftmals nicht die erforderlichen hohen Konzentrationen erreichen. Die Herstellung von Polymeren mit nichtlinear optischen Seitenketten aus bereits geordneten Monomeren und der Aufbau von nichtlinear ortischen Seitenketten an einem bereits fertigen Polymergerüst sind Beispiele für aufwendige Verfahren.

Es besteht somit ein Bedürfnis nach weiteren nichtlinear optischen Materialien und insbesondere solchen, die die geschilderten Nachteile nicht oder nur in geringerem Maße aufweisen und die insbesondere ohne das Erfordernis des Vorliegens nichtzentrosymmetrischer Kristallverbände die Herstellung nichtlinear optischer Anorderungen erlaubt.

Diese Aufgabe wird durch die Bereitstellung der erfindungsgemäßen Materialien mit stickstoffhaltigen Sechsringverbindungen gelöst.

Es wurde überraschenderweise gefunden, daß sich Polymere, die kovalent gebunden den Rest einer Verbindung der Formel I enthalten, Zusammensetzungen, die diese Polymere enthalten und Verbindungen der Formel I in vorzüglicher Weise als Materialien mit nichtlinear optischen Eigenschaften eignen.

Gegenstand der Erfindung sind daher Polymere, die kovalent gebunden den Rest einer stickstoffhaltigen Sechsringverbindung enthalten, welche in 4-Stellung zu einer Azagruppe n- oder $\pi$-Elektronen besitzende Donorsubstituenten aufweisen, dadurch gekennzeichnet, daß die zugrundeliegenden Sechsringverbindungen Verbindungen der Formel I,

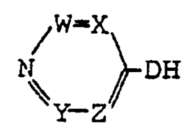

I

worin

D — $(CH_2)_n$ mit n gleich 2 bis 30 bedeutet, worin eine oder mehrere $CH_2$-Gruppen durch $-C(R^1)=C(R^1)-$, $-C\equiv C-$, $-NR^1-$, $-O-$, $-CO-$, $-O-CO-$, $-CO-O-$, $-S-$, $-N=P(DR^1)_2-$, wobei zwei Heteroatome nicht durch eine Einfachbindung miteinander verknüpft sind, jeweils unsubstituiertes oder durch $-R^1$, $-NR^1R^1$, $-OR^1$ oder $-SR^1$ substituiertes $C_6$-$C_{18}$ Aryldiyl und/oder elektronenreiches Heteroaryldiyl ersetzt sind,

oder DH — OH, $NH_2$, SH, $C_6$-$C_{18}$ Aryl und/oder elektronenreiches Heteroaryl,

$R^1$ — jeweils unabhängig voneinander H oder $C_mH_{2m+1}$ mit m gleich 1 bis 30,

W, X, Y, Z — jeweils unabhängig voneinander $CR^1$ oder C-Halogen, einer oder zwei der Reste W, X, Y oder Z jeweils unabhängig voneinander auch $CR^2$, N und/ oder P,

$R^2$ — $(CH_2)_n$ H mit n gleich 2 bis 30, worin eine oder mehrere $CH_2$-Gruppen durch $-C(R^1)=C(R^1)-$, $-C\equiv C-$, $-NR^1-$, $-O-$, $-CO-$, $-O-CO-$, $-CO-O-$, $-S-$, worin zwei Heteroatome nicht miteinander verkünft sind, jeweils unsubstituiertes oder durch $-R^1$, $-NR^1R^1$, $-OR^1$ oder $-SR^1$ substituiertes $C_6$-$C_{18}$ Aryldiyl ersetzt sein können,

bedeuten,

oder Säureadditionssalze der basischen unter diesen Verbindungen sind, wobei eine kovalente Anbindung an eine Meth(acrylat)polymermatrix über einen Spacer verläuft, falls die Anbindung in DH erfolgt und DH OH, $NH_2$ oder SH bedeutet.

Insbesondere Gegenstand der Erfindung sind solche Polymere, die Monomereinheiten der Formel II,

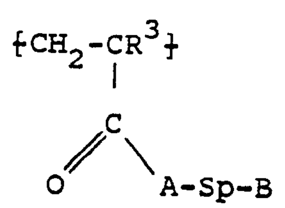

II

worin

$R^3$ H oder Methyl,
A O oder $NR^4$,
Sp eine Einfachbindung oder einen Spacer
B der Rest einer Verbindung der Formel I und
$R^4$ H oder $C_1$-$C_6$ Alkyl bedeuten, enthalten.

Gegenstand der Erfindung sind auch Zusammensetzungen, die diese Polymere enthalten.

Gegenstand der Erfindung ist weiterhin die Verwendung dieser Polymere als nichtlinear optische Materialien.

Gegenstand der Erfindung ist auch die Verwendung von Verbindungen der Formel I mit den angegebenen Definitionen, worin aber

$R^2$ $(CH_2)_n$ mit n gleich 2 bis 30 bedeutet, worin eine oder mehrere $CH_2$-Gruppen durch $-C(R^1)=C(R^1)-$, $-C\equiv C-$, $-NR^5-$, $-O-$, $-CO-$, $-O-CO-$, $-CO-O$ ; $-S-$, wobei zwei Heteroatome nicht miteinander verknüpft sind, jeweils unsubstituiertes oder durch $-R^1$, $-NR^1R^1$, $-OR^1$ oder $-SR^1$ substituiertes $C_6$-$C_{18}$ Aryldiyl ersetzt sein können und

$R^5$ $C_mH_{2m+1}$ mit m gleich 1 bis 30 bedeuten,
mit der Maßgabe, daß

a) falls X oder Z N bedeuten, D die in Formel I, jedoch nicht die für die Alternative DH angegebene Bedeutung hat und

b) falls W, X, Y und Z CH bedeuten und zwei $CH_2$-Gruppen von D durch $-CH=CH-$ ersetzt sind, in Nachbarstellung zu diesen beiden $-CH=CH$-Gruppen keine $-CO$-Gruppen vorhanden sein dürfen,

oder Säureadditionssalzen der basischen unter diesen Verbindungen, als nichtlinear optische Materialien.

Gegenstand der Erfindung ist auch ein Verfahren zur Herstellung von Polymermaterialien mit nichtlinear optischen Eigenschaften, dadurch gekennzeichnet, daß man Materialien, enthaltend Polymere nach Anspruch 1, durch Anlegen eines elektrischen Feldes dipolar ausrichtet.

Die stickstoffhaltigen Struktureinheiten gemäß Formel I zeigen hervorragende nichtlinear optische Eigenschaften Es ist dabei unerheblich, ob sie als Verbindungen der Formel I oder als deren Reste kovalent gebunden an eine Polymermatrix, wie z.B. nach Formel II, die erfindungsgemäße Verwendung finden. Von Bedeutung ist lediglich das Vorhandensein eines Donor-Akzeptor-Systems in einer solchen Sturktureinheit. Als Akzeptor wirkt der stickstoffhaltige Sechsring, als Donor eine elektronenschiebende funktionelle Einheit, wie z.B. eine Amino-, Alkohol- oder Thioalkoholgruppe oder ein anderer elektronenreicher Substituent.

In diesem Zusammenhang ist auch die Struktur des Polymergerüsts unbedeutend. So können Polystyrole, Polyester, Polysiloxane, Poly(meth)acrylate, Poly(meth)acrylamide, sowie deren Copolymere und Polymergemische oder auch andere geeignete Polymermaterialien Verwendung finden.

Ein ähnliches Donor-Akzeptor-System mit Aromaten oder Heteroaromaten als Donoren bzw. Akzeptoren ist in der japanischen Auslegeschrift JP 61-060 638 offenbart. Dort sind jedoch Donor- und Akzeptorteil durch eine Polymerhauptkette voneinander getrennt. Weiterhin sind Donor- und Akzeptorteil auch bei zugrundeliegenden Monomeren lateral durch eine wasserstoffbindende Gruppe, wie etwa $-CONH-$ oder $-CH(OH)-$, substituiert.

Die erfindungsgemäßen Polymere der Formel II werden durch Reaktion von geeigneten Alkoholen oder Aminen der Formel I mit (Meth)acrylsäure oder ihren reaktionsfähigen Derivaten mit anschließender Polymerisation hergestellt. Dabei sind solche Polymere bevorzugt, die aus den entsprechenden Verbindungen der Formel I dargestellt werden können, in denen die Amino- oder Hydroxygruppe ggf. über einen Spacer an einem Ringkohlenstoff oder vorzugsweise terminal an der Alkylenkette D gebunden ist.

Bevorzugte, erfindungsgemäße Polymere der Formel II sind Polyacrylate und Polymethacrylate mit A gleich O und $R^3$ entweder gleich H oder Methyl.

Ähnlich strukturierte Polymere und Copolymere sind von P. Le Barny et al. in SPIE Vol. 682, Molecular and Polymeric Optoelectronic Materials : Fundamentals and Applications, S. 56 (1986) beschrieben. Aufgrund der dort als Elektronenakzeptor wirkenden Cyano- und Nitrogruppen liegt jedoch die Absorption in einem für die Anwendung zur Frequenzverdopplung von Laserlicht ungünstigen Bereich.

Bei den erfindungsgemäßen Polymeren der Formel II kommen als Spacer vor allem Alkylengruppen mit 2 bis 20 C-Atomen in Betracht, die linear oder verzweigt und in denen eine oder mehrere $CH_2$-Gruppen durch $-O-$, $-S-$ und/oder $-NR^1-$ ersetzt sein können.

Beispielsweise kommen als Spacer in Betracht :

Ethylen, Propylen, Butylen, Pentylen, Hexylen, Octylen, Decylen, Undecylen, Dodecylen, Octadecylen, Ethylenoxyethylen, Ethylenthioethylen, Ethylen-N-methyliminoethylen oder 1-Methylalkylen.

In der Formel I bedeuten W, X, Y und Z jeweils unabhängig voneinander $CR^1$ oder C-Halogen, insbesondere $CR^1$. Einer oder zwei der Reste W, X, Y oder Z bedeuten vorzugsweise auch $CR^2$ oder N. Insbesondere sind solche Ringe bevorzugt, in denen X oder Z und X und Z N bedeuten.

Die stickstoffhaltige Sechsringverbindung bedeutet dementsprechend vorzugsweise unsubstituiertes oder durch eine mit der angegebenen bevorzugten Bedeutung substituiertes, gegebenenfalls an einem basischen Ringstickstoff protoniertes, Pyridin, Pyridazin, 1, 3, 5-Triazin oder Pyrimidin, insbesondere Pyridin und 1, 3, 5-Triazin.

Einige Pyridinverbindungen der allgemeinen Formel I sind bekannt ; so z.B. 4-(4-Dimethylaminophenyl)-pyridin (Koenigs, Ruppelt, Liebigs Ann.Chem. 509 (1934) 142) ; 4-(2-[4]Pyridylvinyl)-anilin (Royer, Soc. 1947, 560) ; N,N-Dimethyl-4-(2-[4]-pyridylvinyl]-anilin (Parker, Furst, J.Org.Chem. 23 (1958), 20) ; 4-(2-[4]Pyridylvinyl)-anisol (Proske, Ber. 42 (1909), 1450) ; 4-(4-Methoxyphenyl)-pyridin (Haworth et al., Soc. 1940, 358) ; 2-(2-[4]Pyridylvinyl)-thiophen (Frank et al., J.Org.Chem. 43 (1978), 2947). Die Neuen unter ihnen sind ebenfalls Gegenstand der Erfindung.

D bedeutet vorzugsweise $(CH_2)_2$ bis $(CH_2)_{30}$, worin eine oder mehrere, insbesondere 2, 3, 4 oder 5 $CH_2$-Gruppen durch $-NR^1-$, $-CO-$, $-CO-O-$, $-O-$, $-S-$, $-C(R^1)=C(R^1)-$, $-C{\equiv}C-$ und/oder $C_6$-$C_{18}$ Aryldiyl ersetzt sind. Insbesondere bevorzugt ist $-NR^1-$, $-O-$, $-C(R^1)=C(R^1)-$, $-C{\equiv}C-$ und/oder substituiertes oder unsubstituiertes $C_6$-$C_{18}$ Aryldiyl. Alternativ dazu bedeutet DH im Falle eines Polymers vorzugsweise auch OH, $NH_2$ oder substituiertes oder unsubstituiertes elektronenreiches Heteroaryl oder $C_6$-$C_{18}$ Aryl.

Unter Aryldiyl (dies gilt auch für Aryl) bevorzugt ist $C_6$-$C_{14}$ Aryldiyl, insbesondere $C_6$-$C_{10}$ Aryldiyl und bedeutet demnach beispielsweise 1,2-, 1,3-, 1,4-Phenylen, 1,2-, 1,3-, 1,4-, 1,5-, 1,8-, 2,3-, 2,5-, 2,6-, 2,7-Naphthylen, Anthracendiyl oder Phenanthrendiyl.

Heteroaryldiyl (dies gilt auch für Heteroaryl) bedeutet Pyrroldiyl, Furandiyl, Thiophendiyl, Imidazoldiyl, Pyrazoldiyl, Oxazoldiyl, Thiazoldiyl, Chinolindiyl, Isochinolindiyl, Chinoxalindiyl, Indoldiyl, Benzimidazoldiyl, Benzothiazoldiyl.

Sind Aryl- und Heteroaryldiyl substituiert, so sind sie vorzugsweise durch $-R^1$, $-NR^1R^1$ und/oder $-OR^1$ substituiert, wobei $R^1$ jeweils unabhängig H oder verzweigtes oder unverzweigtes $C_1$-$C_{12}$ Alkyl bedeutet. $R^1$ bedeutet vorzugsweise H oder jeweils unabhängig voneinander einen verzweigten oder unverzweigten Alkylrest mit bis zu 18, insbesondere bevorzugt mit bis zu 15 C-Atomen.

$R^2$ bedeutet vorzugsweise $(CH_2)_2$ bis $(CH_2)_{20}$, worin eine oder mehrere, insbesondere 1, 2, 3 oder 4 $CH_2$-Gruppen durch $-C(R^1)=C(R^1)-$, $-NR^1-$, $-O-$, $-CO-O-$, substituiertes oder unsubstituiertes Aryldiyl mit einer der für $R^1$ angegebenen bevorzugten Bedeutungen ersetzt sein können.

$R^4$ bedeutet vorzugsweise H oder jeweils unabhängig voneinander verzweigtes oder unverzweigtes $C_1$-$C_6$ Alkyl, so z.B. Methyl, Ethyl, Propyl, Butyl, Pentyl, Hexyl, 2-Methylethyl, 2-Methylpropyl, 2-Methylbutyl, 2-Ethylpropyl oder 2-Ethylbutyl.

$R^5$ hat bevorzugt die für $R^1$ angegebenen bevorzugten Bedeutungen, bedeutet jedoch definitionsgemäß nicht Wasserstoff.

Dementsprechend werden erfindungsgemäß insbesondere diejenigen Verbindungen der allgemeinen Formel I oder diejenigen Polymere, die kovalent gebunden den Rest einer Verbindung der Formel I enthalten, bevorzugt als nichtlinear optische Materialien verwendet, in denen $R^1$, $R^2$, $R^3$, $R^4$, $R^5$, W, X, Y, Z, D, Aryl- und Heteroaryldiyl die vorstehend genannten Bedeutungen besitzen.

Somit sind bevorzugte Verbindungen der Formel I und Verbindungen der Formel 1, deren Reste kovalent an eine Polymerkette gebunden sind, diejenigen der Teilformeln Ia bis Ig

| | |
|---|---|
| $Het-D_1-D_2^*-(CH_2)_p-H$ | Ia |
| $Het-D_1-D_2-D_3^*-(CH_2)_p-H$ | Ib |
| $Het-D_1-D_2^*-(CH_2)_p-OH$ | Ic |
| $Het-D_1-D_2-D_3^*-(CH_2)_p-OH$ | Id |
| $Het-D_1-D_2-D_3-D_4^*-(CH_2)_p-H$ | Ie |
| $Het-D_1-D_2-D_3-D_4-D_5^*-(CH_2)_p-H$ | If |
| $Het-D_1-D_2-D_3-D_4^*-(CH_2)_p-OH$ | Ig |

Het bedeutet gemäß Formel I vorzugsweise einen unsubstituierten oder durch Halogen wie F, Cl und/oder Br und/oder durch $R^1$ und/oder $R^2$ mit den angegebenen bevorzugten Bedeutungen substituierten, gegebenenfalls an einem basischen Ringstickstoff protonierten, Pyridin-, Pyrimidin- oder 1, 3, 5-Triazinring. $D_1$ bis $D_4$ bedeutet bevorzugt $-C(R^1)=C(R^1)-$, $-C{\equiv}C-$ oder substituiertes oder unsubstituiertes Aryldiyl, p 0 bis 20, vorzugsweise 0 bis 18 und $D_2^*$ bis $D_5^*$ einen Elektronendonator wie $-NR^1-$, $-O-$, $-S-$ oder substituiertes oder unsubstituiertes Heteroaryldiyl mit den jeweils angegebenen Bedeutungen. Inbesondere bevorzugt bedeutet $D_1$ bis $D_4$ $-C(R^1)=C(R^1)-$ oder substituiertes oder unsubstituiertes Aryldiyl, $D_2^*$ bis $D_5^*$ $-NR^1$, $-O-$ oder Heteroaryldiyl. Besonders bevorzugt sind die Verbindungen der Teilformeln Ia bis Ie und Ig.

Von der Teilfomel Ia sind demgemäß Verbindungen der Unterformeln Ia1 und Ia2 besonders bevorzugt. Der Einfachheit halber bedeutet hier und im folgenden Pyr einen substituierten oder unsubstituierten, gegebenenfalls an einem basischen Ringstickstoff protonierten, Pyridin- oder 1, 3, 5-Triazinring, E $-C(R^1)=C(R^1)$ und Phe unsubstituiertes oder substituiertes 1,4-Phenylen oder Naphthylen.

Pyr-Phe-$D_2$*–$(CH_2)_p$–H Ia1

Pyr-E-$D_2$*–$(CH_2)_p$–H Ia2

Die bevorzugten Verbindungen der Teilformel Ib umfassen solche der Unterformeln Ib1 bis Ib3

Pyr-Phe-Phe-$D_3$*–$(CH_2)_p$–H Ib1

Pyr-Phe-E-$D_3$*–$(CH_2)_p$–H Ib2

Pyr-E-Phe-$D_3$*–$(CH_2)_p$–H Ib3

Die bevorzugten Verbindungen der Teilformeln Ic umfassen solche der Unterformeln Ic1 und Ic2

Pyr-Phe-$D_2$*–$(CH_2)_p$–OH Ic1

Pyr-E-$D_2$*–$(CH_2)_p$–OH Ic2

Die bevorzugten Verbindungen der Teilformeln Id umfassen solche der Unterformeln Id1 bis Id3

Pyr-Phe-Phe-$D_3$*–$(CH_2)_p$–OH Id1

Pyr-Phe-E-$D_3$*–$(CH_2)_p$–OH Id2

Pyr-E-Phe-$D_3$*–$(CH_2)_p$–OH Id3

Die bevorzugten Verbindungen der Teilformeln Ie umfassen solche der Unterformeln Ie1 bis Ie5

Pyr-Phe-Phe-Phe-$D_4$*–$(CH_2)_p$–H Ie1

Pyr-Phe-Phe-E-$D_4$*–$(CH_2)_p$–H Ie2

Pyr-Phe-E-Phe-$D_4$*–$(CH_2)_p$–H Ie3

Pyr-E-Phe-Phe-$D_4$*–$(CH_2)_p$–H Ie4

Pyr-E-Phe-E-$D_4$*–$(CH_2)_p$–H Ie5

Die bevorzugten Verbindungen der Teilformeln Ig umfassen solche der Unterformeln Ig1 bis Ig5

Pyr-Phe-Phe-Phe-$D_4$*–$(CH_2)_p$–OH Ig1

Pyr-Phe-Phe-E-$D_4$*–$(CH_2)_p$–OH Ig2

Pyr-Phe-E-Phe-$D_4$*–$(CH_2)_p$–OH Ig3

Pyr-E-Phe-Phe-$D_4$*–$(CH_2)_p$–OH Ig4

Pyr-E-Phe-E-$D_4$*–$(CH_2)_p$–OH Ig5

Die Verbindungen der allgemeinen Formel I können nach Standardverfahren der organischen Chemie hergestellt werden.

Die Reaktionsbedingungen können den Standardwerken der präparativen organischen Chemie entnommen werden, z.B. HOUBEN-WEYL, Methoden der organischen Chemie, Georg Thieme Verlag, Stuttgart, ORGANIC SYNTHESES, J. Wiley, New York - London - Sydney, oder HETEROCYCLIC COMPOUNDS, Bd. 14, J. Wiley, New York - London - Sydney.

Verbindungen der allgemeinen Formel I, in denen D, $R^1$, W, X, Y und Z die voranstehend angegebene Bedeutung haben, können beispielsweise hergestellt werden, indem Alkylverbindungen der Formel I, in denen D eine Alkylgruppe bedeutet, mit einem entsprechenden Aldehyd oder Keton in an sich üblicher Weise kondensiert werden. Die Kondensation wird vorteilhafterweise unter Zusatz eines wasserentziehenden Mittels wie beispielsweise Acetanhydrid, einer Base wie Ammoniak, Ethylamin, Piperidin, Pyridin oder eines Salzes wie Ammoniumacetat oder Piperidiniumacetat durchgeführt. Als zweckmäßig erweist sich auch der Zusatz eines inerten Lösungsmittels wie z.B. Kohlenwasserstoffe wie Hexan, Cyclohexan, Benzol, Toluol oder Xylol. Die Reaktionstemperatur liegt gewöhnlich zwischen 0° und 250°C, vorzugsweise zwischen +20° und 150°C. Bei diesen Temperaturen sind die Reaktionen in der Regel nach 15 Minuten bis 48 Stunden beendet.

Die als Ausgangsmaterial verwendeten Alkylsechsringazaverbindungen und Aldehyde bzw. Ketone sind bekannt oder können in Analogie zu den bekannten nach gebräuchlichen Methoden erhalten werden.

Zur Herstellung der Säureadditionssalze können sowohl anorganische Säuren, wie z.B. Halogenwasserstoffsäuren als auch organische Säuren, wie z.B. Essigsäure, p-Toluolsulfonsäure und dergleichen eingesetzt werden.

In einem weiteren Verfahren zur Herstellung der Verbindungen der Formel I setzt man ein Arylhalogenid mit einem Olefin um in Gegenwart eines tertiären Amins und eines Palladiumkatalysators (vgl. R.F. Heck, Acc. Chem. Res. 12 (1979) 146). Geeignete Arylhalogenide sind beispielsweise Chloride, Bromide und Iodide, insbesondere Bromide. Die für das Gelingen der Kupplungsreaktion erforderlichen tertiären Amine, wie z.B. Triethylamin, eignen sich auch als Lösungsmittel. Als Palladiumkatalysatoren sind beispielsweise dessen Salze, insbesondere Pd (II)-acetat, mit organischen Phosphor (III)-Verbindungen wie z.B. Triarylphosphanen geeignet. Man kann dabei in Gegenwart oder Abwesenheit eines inerten Lösungsmittels bei Temperaturen zwischen etwa 0° und 150°, vorzugsweise zwischen etwa 20° und 100°, arbeiten ; als Lösungsmittel kommen z.B. Nitrile wie Acetonitril oder Kohlenwasserstoffe wie Benzol oder Toluol in Betracht. Die als Ausgangsstoffe eingesetzten Arylhalogenide und Olefine sind vielfach im Handel erhältlich oder können nach literaturbekannten Verfahren hergestellt werden, beispielsweise durch Halogenierung entsprechender Stammverbindungen bzw. durch Eliminierungsreaktionen an geeigneten Alkoholen oder Halogeniden.

Weiterhin können zur Kopplung von Aromaten Arylhalogenide mit Arylzinnverbindungen umgesetzt werden. Bevorzugt werden diese Reaktionen unter Zusatz eines Katalysators wie z.B. eines Palladium (0) komplexes in inerten Lösungsmitteln wie Kohlenwasserstoffen bei hohen Temperaturen, z.B. in siedendem Xylol, unter Schutzgas durchgeführt.

Von den Polymeren sind besonders bevorzugt Polymere der Formel II sowie Polymergemische, enthaltend Polymere der Formel II.

Die den Homopolymeren zugrundeliegenden Monomere werden durch Veresterungen von (Meth)acrylsäure mit geeigneten Alkoholen oder Aminen der Formel I hergestellt, und zwar unter an sich üblichen und dem Fachmann bekannten Reaktionsbedingungen. Die Monomeren sind ebenfalls Gegenstand der Erfindung.

Als Comonomere zur Herstellung der Copolymeren kommen vor allem in Betracht:

$C_1$- bis $C_{20}$-, vorzugsweise $C_4$- bis $C_8$-Alkylester der Acrylsäure und/oder der Methacrylsäure, Gemische dieser Ester sowie Gemische der genannten Ester mit Acrylnitril, Methylacrylnitril, Styrol, 4-Methylstyrol, Acryl- und/oder Methacrylamid.

Als Monomere kommen neben den bestimmt genannten im einzelnen z.B. in Betracht:

Methylacrylat, Ethylacrylat, Propylacrylat, n-Butylacrylat, Isobutylacrylat, Hexylacrylat, n-Octylacrylat, 2-Ethylhexylacrylat, Nonylacrylat, Decylacrylat, Dodecylacrylat, Hexadecylacrylat, Octadecylacrylat sowie die entsprechenden Methacrylate und Methacrylate wie beispielsweise

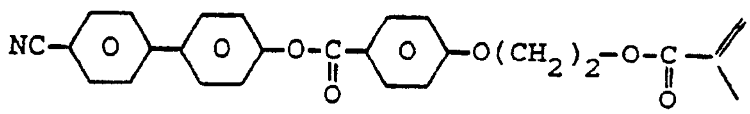

Bevorzugt sind die genannten Acrylate und Methacrylate von Alkanolen bis zu 8 C-Atomen.

Die Herstellung der Polymere erfolgt nach bekannten Verfahren, vorzugsweise durch radikalische Polymerisation.

Zur Auslösung der Polymerisation geeignet ist eine Vielzahl bekannter Initiatoren, wie z.B. in Pappas (Hrsg.), UV Curing : Science and Technology, Technology Marketing Corp., Stamford, CT, 1978, oder in Ocian, Principles of Polymerization, McGraw-Hill, New York, beschrieben. Beispiele für thermisch zerfallende, radikalische Initiatoren sind Azoisobutyronitril (AIBN) oder Perverbindungen wie Kaliumpersulfat, Dibenzoylperoxid und Cyclohexanonperoxid, für durch Strahlungseinwirkung zerfallende Initiatoren Benzophenone wie z.B. Michlers Keton [4,4′-Bis(dimethylamino)benzophenon], 4,4′-Bis(diethylamino)benzophenon, p-Dimethylaminobenzophenon, p-Chlorbenzophenon, Benzophenon ; Anthrachinone wie z.B. Anthrachinon, 2-Chloranthrachinon, 2-Alkylanthrachinone ; Xanthone wie z.B. 2-Halogenxanthone oder 2-Alkylxanthone ; Thioxanthone wie 2-Chlorthioxanthon, 2-Alkylthioxanthone ; Acridanone wie z.B. 2-Alkylacridanone oder N-substituierte Acridanone ; Benzoine wie z.B. p-Dimethylaminobenzoin und Alkylether des Benzoins ; Benzilketale, α-Halogenketone, Dialkoxyacetophenone, α-Hydroxyalkylphenone und α-Aminoalkylphenone wie sie beispielsweise in der DE-OS 27 22 264 und in der EP-A-3003 beschrieben sind, weiterhin z.B Fluorenone, Dibenzosuberone, Phenanthrenchinone, Benzoesäureester wie z.B. Hydroxypropylbenzoat sowie Oniumsalze wie z.B. Diaryliodonium- oder Triarylsulfoniumsalze.

Mit dem ethylenisch ungesättigten Monomeren können erforderlichenfalls eine Reihe von Zusatzstoffen umgesetzt werden.

Als Reaktionsbeschleuniger können beispielsweise organische Amine, Phosphine, Alkohole und/oder Thiole, die alle mindestens eine zum Heteroatom α-ständige CH-Gruppe aufweisen, zugesetzt werden. Geeignet sind z.B. primäre, sekundäre und tertiäre aliphatische, aromatische, araliphatische oder heterocyclische Amine, wie sie z.B. in der US-A-3,759,807 beschrieben sind. Beispiele für solche Amine sind Butylamin, Dibutylamin, Tributylamin, Cyclohexylamin, Benzyldimethylamin, Di-cyclohexylamin, Triethanolamin, N-Methyldiethanolamin, Phenyl-diethanolamin, Piperidin, Piperazin, Morpholin, Pyridin, Chinolin, p-Dimethylaminobenzoesäureethylester, p-Dimethylaminobenzoesäurebutylester, 4,4′-Bis-dimethy1aminobenzophenon (Michlers Keton) oder 4,4′-Bis-diethylamino-benzophenon. Besonders bevorzugt sind tertiäre Amine wie beispielsweise Trimethylamin, Tri-isopropylamin, Tributylamin, Octyl-dimethylamin, Dodecyldimethylamin, Triethanolamin, N-Methyl-diethanolamin, N-Butyl-diethanolamin, Tris(hydroxypropyl)amin, Dimethylaminobenzoesäurealkylester.

Weiterhin kommen als Reaktionsbeschleuniger beispielsweise Trialkylphosphine, sekundäre Alkohole und Thiole in Frage.

Auch können geringe Mengen von Lichtstabilisatoren, wie beispielsweise Benzophenon-Derivate, Benztriazol-Derivate, Tetraalkylpiperidine oder Phenylsalicylate, zugesetzt werden.

Je nach Einsatzzweck eignen sich organische Zusatzstoffe, wie Thixotropiemittel, Verlaufsmittel, Bindemittel, Gleitmittel, Mattierungsmittel, Weichmacher, Netzmittel, Silikone zur Verbesserung der Oberflächenbeschaffenheit, Antiausschwimmittel oder geringe Mengen an Lösungsmitteln als Zusatz zu den ethylenisch ungesättigten Monomeren.

Die Photopolymerisation erfolgt nach an sich bekannten Methoden durch Bestrahlen mit Licht oder UV-Strahlung des Wellenlängenbereichs von 250 bis 500 nm, vorzugsweise von 300 bis 400 nm. Als Strahlenquellen können Sonnenlicht oder künstliche Strahler verwendet werden. Vorteilhaft sind z.B. Quecksilberdampf-Hochdruck-, -Mitteldruck- oder -Niederdrucklampen, Xenon- und Wolframlampen ; Laser-Lichtquellen können ebenfalls eingesetzt werden.

Weiterhin eignet sich energiereiche Strahlung wie beispielsweise Röntgen-, Elektronen-, Neutronen- und andere Kernstrahlung zur Polymerisationsauslösung, wobei die Menge an zugesetztem Photoinitiator üblicherweise verringert bzw. darauf gänzlich verzichtet werden kann.

Die thermische Polymerisation gelingt beispielsweise durch Behandeln mittels Ultraschall oder Mikrowellen oder durch Einwirkung von IR-Strahlung.

Durch Aufbringen von Verbindungen der Formel I auf ein Substrat in gelöster oder flüssiger Form durch beispielsweise Bestreichen, Bedrucken, Tauchen oder Aufschleudern werden nichtlinear optische Anordnungen erhalten. Sie können weiterhin auch in Pulverform, als Einlagerungen in andere Molekülverbände, wie beispielsweise Polymere, Clathrate, feste Lösungen, als Einkristalle oder Lösungen ihre nichtlinear optischen Eigenschaften entfalten. Die erfindungsgemäßen Polymermaterialien werden im elektrischen Gleichspannungsfeld oberhalb der Glastemperatur dipolar ausgerichtet. Nach dem Abkühlen im elektrischen Feld unter die Glastemperatur erhält man Polymermaterialien mit vorteilhaften nichtlinear optischen Eigenschaften. Hierfür geeignet sind sowohl isotrope als auch flüssigkristalline Polymermaterialien.

Die erfindungsgemäßen Materialien mit stickstoffhaltigen Sechsringen erschließen somit ein weites Anwendungsfeld. Insbesondere eignen sie sich zur Frequenzverdoppelung von Laserlicht sowie zur Herstellung von Schaltelementen, Wellenleitern und Phasenmodulatoren auf dem Gebiet der integrierten Optik.

Zur Erläuterung der Erfindung dienen die folgenden Beispiele. Übliches Aufarbeiten bedeutet : Man trocknet die organischen Phasen mit Natriumsulfat, dampft das Lösungsmittel ab und reinigt das Produkt durch Destillation, Umkristallisation oder Chromatographie. K bedeutet kristallin, $S_A$ smektisch A, N nematisch und I isotrop.

Beispiel 1

4-(2-[4]Pyridylvinyl)-(6-hydroxyhexyloxy)-benzol

Zu einer Lösung von 10 g 4-(6-Hydroxyhexyloxy)-brombenzol in 30 ml Acetonitril werden 7,7 g 4-Vinylpyridin, 3,7 g Triethylamin, 82 mg Palladium (II)-acetat und 223 mg Tris-(2-methylphenyl)-phosphan gegeben. Man erhitzt 18 Stunden zum Sieden, läßt abkühlen und filtriert den ausgefallenen Niederschlag ab. Nach zweimaliger Kristallisation aus Ethanol werden blaßgelbe Kristalle vom Schmelzpunkt 154-155° erhalten.

Analog werden hergestellt :

N-Hexyl-4-(2-[4]pyridylvinyl)-anilin ; Schmp. 110° ; gelbe Kristalle
N-Octadecyl-4-(2-[4]pyridylvinyl)-anilin
N-Hexyl-N-methyl-4-(2-[4]pyridylvinyl)-anilin ; gelbe Kristalle
N,N-Dioctadecyl-4-(2-[4]pyridylvinyl)-anilin
4-(2-[4]Pyridiniovinyl)-carboxymethoxybenzol-chlorid ; gelbe Nadeln
5-(2-[4]Pyridylvinyl)-indol ; gelbe Nadeln
4′-(2-[4]Pyridylvinyl)-biphenyl-4-ol ; gelbgrüne Kristalle
4-(6-Hydroxyhexyloxy)-4′-(2-[4]Pyridylvinyl)-biphenyl ;
Schmp. 243° ; gelbe Kristalle

Beispiel 2

4-{2-[4-(N-4-Hydroxybutyl-N-methylamino)-phenyl]-ethenyl}-pyridin

a) N-(4-Acetoxybutyl)-N-methyl-anilin

Eine Lösung von 40.3 g N-Methylanilin und 100 g 4-Brombutylacetat in 200 ml 1,3-Dimethyl-2-imidazolidinon (DMEU) wird mit 38,0 g Natriumhydrogencarbonat versetzt und 18 Stunden auf 100°C erhitzt. Das Gemisch wird auf Wasser gegossen und mit Dichlormethan extrahiert. Nach üblichem Aufarbeiten erhält man eine gelbliche Flüssigkeit vom Siedepunkt 130°C/ 53,2 Pa (0,4 torr).

b) 4-Brom-N-(4-acetoxybutyl)-N-methyl-anilin

Zu einer Lösung von 50 g N-(4-Acetoxybutyl)-N-methylanilin in 100 ml Dichlormethan werden unter Eiskühlung 36,1 g Brom zugetropft. Das Gemisch wird mit Wasser, Natriumhydrogencarbonat-Lösung und

anschließend wieder mit Wasser gewaschen. Nach dem üblichen Aufarbeiten erhält man eine farblose Flüssigkeit.

c) 4-{2-[4-(N-4-Acetoxybutyl-N-methylamino)-phenyl]-ethenyl}-pyridin

Eine Lösung von 33,0 g 4-Brom-N-(4-acetoxybutyl)-N-methylanilin, 11,2 g Triethylamin, 23,1 g 4-Vinylpyridin, 670 mg Tris-o-tolyl-phosphan und 250 mg Palladium (II) acetat in 200 ml Acetonitril wird 28 Stunden auf 100°C erhitzt. Man läßt das Reaktionsgemisch abkühlen, filtriert den Niederschlag ab und kristallisiert aus Ethanol um. Man erhält orangefarbene Kristalle vom Schmelzpunkt 110°C.

d) 4-{2-[4-(N-4-Hydroxybutyl-N-methylamino)-phenyl]-ethenyl}-pyridin

Eine Lösung von 11,0 g 4-{2-[4-(N-4-Acetoxybutyl-N-methylamino)phenyl]-ethenyl}-pyridin und 3,8 g Kaliumhydroxid in 50 ml Ethanol wird 18 Stunden zum Sieden erhitzt. Man läßt abkühlen, filtriert den entstandenen Niederschlag ab und kristallisiert aus Ethanol um. Man erhält gelbe Kristalle vom Schmelzpunkt 172-173°C.

Beispiel 3

4-(4-N,N-Dimethylaminophenyl)-ethinylpyridin

a) 4-[1-Brom-2-(4-N,N-dimethylaminophenyl)-ethenyl]-pyridin

Eine Lösung von 23,0 g 4-[2-(4-N,N-Dimethylaminophenyl)-ethenyl]-pyridin und 18,1 g Brom in 100 ml Eisessig wird 5 Stunden auf 100°C erhitzt. Man läßt abkühlen, saugt den ausgefallenen Niederschlag ab und kristallisiert ihn aus Dichlormethan/Ethanol um. Man erhält rötlich gefärbte Kristalle vom Schmelzpunkt 173-174°C.

b) 4-(4-N,N-Dimethylaminophenyl)-ethinylpyridin

Eine Lösung von 7,1 g 4-[1-Brom-2-(4-N,N-dimethylaminophenyl)-ethenyl]-pyridin und 2,1 g Kaliumhydroxid in 50 ml Ethanol wird 18 Stunden zum Sieden erhitzt. Der entstandene Niederschlag wird abgesaugt und aus Ethanol/Aceton umkristallisiert. Man erhält hellgelbe Kristalle vom Schmelzpunkt 192-193°C.

Beispiel 4

4-[4-(6-Hydroxyhexyloxy)-phenyl]-pyridin

Eine Lösung von 27,2 g Tributyl-4-pyridyl-stannan, 21,2 g 4-Bromphenyl-6-hydroxyhexyl-ether und 1,03 g Tetrakis(triphenylphosphan)palladium in 500 ml Xylol wird unter Stickstoff 18 Stunden zum Sieden erhitzt. Das Gemisch wird filtriert, das Filtrat mit Diethylether verdünnt und mit 10%iger Salzsäure extrahiert. Die wäßrigen Phasen werden mit 2 normaler Natronlauge bis zur alkalischen Reaktion gebracht und mit Diethylether extrahiert. Nach dem üblichen Aufarbeiten (Umkristallisation aus Ethanol) erhält man farblose Kristalle.

Beispiel 5

4-([4]Pyridyl)-phenylimino-triphenylphosphoran

Eine Lösung von 4,64 g Triphenylphosphandibromid und 2,23 g Triethylamin in 30 ml Toluol werden mit 1,87 g 4-(4-Aminophenyl)-pyridin vesetzt und das Gemisch 20 Minuten zum Sieden erhitzt. Man läßt abkühlen und filtriert den Niederschlag ab. Das Filtrat wird eingeengt und der Rückstand zweimal aus Ethylacetat/Petrolether ($K_p$ 50-70°) kristallisiert. Man erhält gelbe Kristalle.

Beispiel 6

N,N-Dimethyl-4-(2, 3, 5, 6-tetrafluor-[4]pyridyl)-anilin

Ein aus 14 g 4-Bromdimethylanilin und 1,9 g Magnesium in 60 ml Tetrahydrofuran erhaltenes Grignardreagens wird langsam zu einer Lösung von 11,8 g Pentafluorpyridin in 65 ml Tetrahydrofuran zugetropft. Danach wird die Mischung auf Wasser gegossen und der entstandene Niederschlag abfiltriert und aus 18%iger Salzsäure kristallisiert. Man erhält farblose Kristalle.

Beispiel 7

2-(4-N,N-Dimethylaminophenyl)-1, 3, 5-triazin

Eine Lösung von 11,6 g 4-N,N-Dimethylaminobenzamidiniumchlorid und 5,0 g 1, 3, 5-Triazin in 30 ml Methanol wird 20 Stunden bei Raumtemperatur gerührt. Den entstandenen Niederschlag filtriert man ab, versetzt das Filtrat mit 1 normaler Natronlauge und extrahiert mit Diethylether. Nach üblichem Aufarbeiten (Umkristallisation aus Ethanol) erhält man gelbe Nadeln.

Analog wird hergestellt:
2-(4-N-Octadecylaminophenyl)-1, 3, 5-triazin

Beispiel 8

4'-(6-Hydroxyhexyloxy)-4-(1, 3, 5-triazin-2-yl)-biphenyl
a) 4-Cyano-4'-(6-hydroxyhexyloxy)-biphenyl
Eine Lösung von 80,0 g 4-Cyano-4'-hydroxybiphenyl und 102,3 g 6-Chlor-1-hexanol in 300 ml 1,3-Dimethyl-2-imidazolidinon (DMEU) wird mit 46,7 g Natriumhydrogencarbonat versetzt und 42 Stunden auf 100°C erhitzt. Das Gemisch wird auf Eis gegossen und mit Diethylether extrahiert. Nach üblichem Aufarbeiten (Umkristallisation aus Ethanol) erhält man farblose Kristalle. K 93° N 116° I.
b) 4'-(6-Hydroxyhexyloxy)-biphenyl-4-yl-carboxamidinium-chlorid
In eine Suspenion von 58,7 g 4-Cyano-4'-(6-hydroxyphenyloxy)-biphenyl in 120 ml Toluol und 100 ml Ethanol wird unter Eiskühlung gasförmiger Chlorwasserstoff bis zur Sättigung eingeleitet und anschließend 16 Stunden bei Raumtemperatur gerührt. Das Lösungsmittel wird abdestilliert und der Rückstand langsam in 300 ml, mit Ammoniak gesättigtes, Ethanol gegeben. Das Gemisch wird 18 Stunden bei Raumtemperatur gerührt, mit Ethanol gewaschen und getrocknet.
c) 4'-(6-Hydroxyhexyloxy)-4-(1, 3, 5-triazin-2-yl)-biphenyl
Ein Gemisch aus 52,0 g 4'-(6-Hydroxyhexyloxy)-biphenyl-4-yl-carboxamidiniumchlorid, 12,1 g Triazin und 400 ml Methanol wird 18 Stunden bei Raumtemperatur gerührt. Das Lösungsmittel wird abdestilliert und der Rückstand chromatographiert (Kieselgel, Dichlormethan/Essigsäureethylester 7 : 3). Man erhält gelbliche Kristalle. K 193° $S_A$ 209° I.
Analog wird hergestellt:
4'-(2-Hydroxyethoxy)-4-(1, 3, 5-triazin-2-yl)-biphenyl Gelbliche Kristalle mit K 233° $S_A$ 247° I.

Beispiel 9

Quarzplatten wurden durch Tauchen in eine $5 \cdot 10^{-4}$ molare Lösung in Ethanol und einer Tauchgeschwindigkeit von 8 cm/min mit einer Schicht der erfindungsgemäßen Sechsringazaverbindungen (vgl. Tab. 1) belegt. Die so beschichteten Substrate wurden mit zur Einfallsebene senkrecht (s) und parallel (p) polarisiertem Laserlicht der Wellenlängen 580 nm bzw. 710 nm bestrahlt und die Intensität der frequenzverdoppelten Strahlung wurde nach Filterung der Anregungsstrahlung mittels eines Photomultipliers bestimmt. Die Zahlenwerte in Tab. 1 sind auf die Signalintensitäten reiner Quarzplatten bei p-Anregung normiert. Als dem Stand der Technik entnommene Vergleichsverbindung dient 4-Nitrobenzoesäure (vgl. T.F. Heinz, H.W.K. Tom, Y.R. Shen, Phys. Rev. A 28 (1983) 1883). Die erfindungsgemäßen Sechsringverbindungen zeigen durchweg vorteilhaftere nichtlinear optische Eigenschaften als der Vergleich.

Tab. 1

| | λ = 580 nm | | λ = 710 nm | |
|---|---|---|---|---|
| | s | p | s | p |
| 4-Nitrobenzoesäure [Vergleich] | 0,6 | 2,4 | 9,5 | 2,4 |
| N,N-Dimethyl-4-(2-[4]pyridylvinyl)-anilin | 22 | 32 | 40 | 72 |
| 2-(2-[4]Pyridylvinyl)-thiophen | 8 | 23 | 24 | 12 |
| 4-(2-[4]Pyridylvinyl)-anilin | 5 | 5 | 8,5 | 6 |
| 4'-(2-[4]Pyridylvinyl)-biphenyl-4-ol | 5,5 | 7,5 | 34 | 9 |
| 4-([4]Pyridyl)-anisol | 3 | 1 | 25 | 18 |
| 4-([4]Pyridylvinyl)-anisol | 41,5 | 23 | 27 | 17 |
| 4-([4]Pyridyl)-phenylimino-triphenyl-phosphoran | 5 | 8,5 | 11 | 10 |
| N-Hexyl-4-(2-[4]pyridylvinyl)-anilin | 240 | 480 | 1000 | 220 |
| 4-(2-[4]Pyridylvinyl)-(6-hydroxyhexyl-oxy)-benzol-chlorid | 13 | 25 | - | - |
| 4-(2-[4]Pyridylvinyl)-(6-hydroxy-hexyloxy)-biphenyl | 56 | 16 | 12 | 10 |
| 5-(2-[4]Pyridylvinyl)-indol | 9 | 6,5 | 25 | 5 |
| 2-(4-N,N-Dimethylaminophenyl)-1,3,5-triazin | 10 | 12 | 108 | 120 |
| 4-(2-[4]Pyridiniovinyl)-carboxymethoxy-benzol | 13 | 15 | 21 | 10 |
| N,N-Dimethyl-4-([4]pyridyl)-anilin | 47 | 44 | 52 | 48 |

Monomere der Formel II

Beispiel 10

4-{2-[4-(6-Methacryloyloxyhexyloxy)-phenyl]-ethenyl}-pyridin

Zu einer auf 0°C gekühlten Lösung von 1,80 g 4-{2-[4-(6-Hydroxyhexyloxy)-phenyl]-ethenyl}-pyridin, 520 mg Methacrylsäure und 74 mg 4-Dimethylaminopyridin in 10 ml Dichlormethan wird eine Lösung von 1,37 g Dicyclohexylcarbodiimid in 2 ml Dichlormethan zugetropft. Man rührt 2 Stunden bei Raumtemperatur und filtriert den Niederschlag ab. Das Filtrat wird eingeengt und chromatographiert (Kieselgel, Dichlormethan/Essigsäureethylester 7 : 3). Man erhält gelbliche Kristalle.

Beispiel 11

4-{2-[4-(N-4-Methacryloyloxybutyl-N-methylamino)-phenyl]-ethenyl}-pyridin

Eine Lösung von 8,0 g 4-(2-[4-(N-4-Hydroxybutyl-N-methylamino)-phenyl]-ethenyl}-pyridin, 0,64 g Dicyclohexylcarbodiimid, 0,34 g Dimethylaminopyridin und 2,4 g Methacrylsäure in 50 ml Dichlormethan wird 18 Stunden bei Raumtemperatur gerührt. Der Niederschlag wird abfiltriert, das Filtrat wird eingedampft und aus Aceton umkristallisiert. Man erhält orangefarbene Kristalle vom Schmelzpunkt 211-212°C.

Beispiel 12

4-[4-(6-Methacryloyloxyhexyloxy)-phenyl]-pyridin

Analog zu Beispiel 11 erhält man aus 4,0 g 4-[4-(6-Hydroxyhexyloxy)-phenyl]-pyridin, 1,27 g Methacrylsäure, 0,18 g Dimethylaminopyridin und 3,35 g Dicyclohexylcarbodiimid 4-[4-(6-Methacryloyloxyheyloxy)-phenyl]-pyridin als farblose Kristalle.

Beispiel 13

4'-(6-Methacryloyloxyhexyloxy)-4-(1, 3, 5-triazin-2-yl)biphenyl

Zu einer auf 0°C gekühlten Lösung von 9,5 g 4'-(6-Hydroxyhexyloxy)-4-(1, 3, 5-triazin-2-yl)-biphenyl, 2,3 g Methacrylsäure, 0,3 g 4-Dimethylaminopyridin und 3 mg 2,6-Ditert·butyl-4-methylphenol in 40 ml Dichlormethan wird eine Lösung von 6,0 g Dicyclohexylcarbodiimid in 5 ml Dichlormethan zugetropft und 42 Stunden bei Raumtemperatur gerührt. Der Niederschlag wurde abgesaugt, das Filtrat eingeengt und der Rückstand chromatographiert. Man erhält farblose Kristalle.

Homopolymere der Verbindungen aus den Beispielen 10 bis 13.

Beispiel 14

Eine Lösung von 250 mg 4-{2-[4-(6-Methacryloyloxyhexyloxy)-phenyl]-ethenyl}-pyridin (Beispiel 10) und 2,2 mg Azobisisobutyronitril in 3 ml N-Methylpyrrolidinon wurde unter Stickstoff 18 Stunden auf 60°C erwärmt. Das Polymer wurde durch zweimaliges Umkristallisieren aus Ethanol isoliert. Man erhält ein blaßgelbes amorphes Polymer.

Analog werden hergestellt aus Beispiel

11 : orangefarbenes amorphes Polymer,
12 : farbloses amorphes Polymer,
13 : farbloses Polymer. $S_A$ 242° I.

Copolymere der Verbindungen aus den Beispielen 10 und 12 mit 2-[4-(4'-Cyanobiphenyl-4-yloxycarbonyl)-phenoxy]-ethylmethacrylat.

Beispiel 15

Eine Lösung von 620 mg 4-{2-[4-(6-Methacryloyloxy-hexyloxy)-phenyl]-ethenyl}-pyridin (Beispiel 10), 725 mg 2-[4-(4'-Cyanobiphenyl-4-yloxycarbonyl)-phenoxy]-ethyl-methacrylat und 33 mg Azobisisobutyronitril in 10 ml 1-Methyl-2-pyrrolidinon wurde 18 Stunden auf 60°C erhitzt. Das Polymer wurde durch zweimalige Umkristallisation aus Ethanol isoliert. Man erhält ein blaßgelbes Polymer. N 167° I.

Analog erhält man ein farbloses Copolymer mit dem nach Beispiel 12 hergestellten Monomer. N 250° I.

## Ansprüche

1. Polymere, die kovalent gebunden den Rest einer stickstoffhaltigen Sechsringverbindung enthalten, welche in 4-Stellung zu einer Azagruppe n- oder π-Elektronen besitzende Donorsubstituenten aufweisen, dadurch gekennzeichnet, daß die zugrundeliegenden Sechsringverbindungen Verbindungen der Formel I,

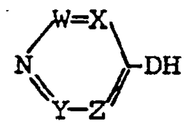

I

Worin

D $(CH_2)_n$ mit n gleich 2 bis 30 bedeutet, worin eine oder mehrere $CH_2$-Gruppen durch $-C(R^1)=C(R^1)-$, $-C{\equiv}C-$, $-NR^1-$, $-O-$, $-CO-$, $-O\text{-}CO-$, $-CO\text{-}O-$, $-S-$, $-N=P(DR^1)_2-$, wobei zwei Heteroatome nicht durch eine Einfachbindung miteinander verknüpft sind, jeweils unsubstituiertes oder durch $-R^1$, $-NR^1R^1$, $-OR^1$ oder $-SR^1$ substituiertes $C_6$-$C_{18}$ Aryldiyl und/oder elektronenreiches Heteroaryldiyl ersetzt sind,

oder DH OH, $NH_2$, SH, $C_6$-$C_{18}$ Aryl und/oder elektronenreiches Heteroaryl,

$R^1$ jeweils unabhängig voneinander H oder $C_mH_{2m+1}$ mit m gleich 1 bis 30,

W, X, Y, Z jeweils unabhängig voneinander $CR^1$ oder C-Halogen, einer oder zwei der Reste W, X, Y oder Z jeweils unabhängig voneinander auch $CR^2$, N und/oder P,

$R^2$ $(CH_2)_n$ H mit n gleich 2 bis 3O, worin eine oder mehrere $CH_2$-Gruppen durch $-C(R^1)=C(R^1)-$, $-C{\equiv}C-$, $-NR^1-$, $-O-$, $-CO-$, $-O\text{-}CO-$, $-CO\text{-}O-$, $-S-$, worin zwei Heteroatome nicht miteinander verkünft sind, jeweils unsubstituiertes oder durch $-R^1$, $-NR^1R^1$, $-OR^1$ oder $-SR^1$ substituiertes $C_6$-$C_{18}$ Aryldiyl ersetzt sein können,

bedeuten, oder Säureadditionssalze der basischen unter diesen Verbindungen sind, wobei eine kovalente Anbindung an eine Meth(acrylat)polymermatrix über einen Spacer verläuft, falls die Anbindung in DH erfolgt und DH OH, $NH_2$ oder SH bedeutet.

2. Polymere nach Anspruch 1, dadurch gekennzeichnet, daß die Reste der Verbindungen der Formel I an Polymere gebunden sind, die Monomereinheiten der Formel II

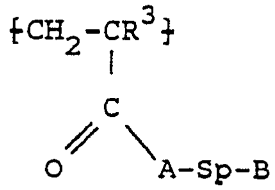

II

worin

$R^3$ H oder Methyl,

A O oder $NR^4$,

Sp eine Einfachbindung oder einen Spacer

B der Rest einer Verbindung der Formel I und

$R^4$ H oder $C_1$-$C_6$ Alkyl bedeuten,

enthalten

3. Zusammensetzungen, gekennzeichnet durch einen Gehalt an Polymeren nach Anspruch 1.

4. Verwendung der Polymere nach Anspruch 1 als nichtlinear optische Materialien.

5. Verwendung von Verbindungen der Formel I mit den angegebenen Definitionen, worin aber

$R^2$ $(CH_2)_n$ mit n gleich 2 bis 30 bedeutet, worin eine oder mehrere $CH_2$-Gruppen durch $-C(R^1)=C(R^1)-$, $-C{\equiv}C-$, $-NR^5-$, $-O-$, $-CO-$, $-O\text{-}CO-$, $-CO\text{-}O$ ; $-S-$, wobei zwei Heteroatome nicht miteinander verknüpft sind, jeweils unsubstituiertes oder durch $-R^1$, $-NR^1R^1$, $-OR^1$ oder $-SR^1$ substituiertes $C_6$-$C_{18}$ Aryldiyl ersetzt sein können und

$R^5$ $C_mH_{2m+1}$ mit m gleich 1 bis 30 bedeuten, mit der Maßgabe, daß

a) falls X oder Z N bedeuten, D die in Formel I, jedoch nicht die für die Alternative DH angegebene Bedeutung hat und

b) falls W, X, Y und Z CH bedeuten und zwei $CH_2$-Gruppen von D durch $-CH=CH-$ ersetzt sind, in Nachbarstellung zu diesen beiden $-CH=CH$-Gruppen keine $-CO$-Gruppen vorhanden sein dürfen,

oder Säureadditionssalzen der basischen unter diesen Verbindungen, als nichtlinear optische Materialien.

6. Verfahren zur Herstellung von Polymermaterialien mit nichtlinear optischen Eigenschaften, dadurch gekennzeichnet, daß man Materialien, enthaltend Polymere nach Anspruch 1, durch Anlegen eines elektrischen Feldes dipolar ausrichtet.

7. Nichtlinear optische Anordnung, enthaltend Polymere nach Anspruch 1.

8. Nichtlinear optische Anordnung, im wesentlichen bestehend aus einer auf ein Substrat aufgebrachten Verbindung der Formel I mit den Definitionen des Anspruchs 5.

## Claims

1. Polymers which contain the radical of a nitrogen containing six-membered ring compound in covalently bound form which have donor substituents possessing n- or $\pi$-electrons in position 4 with respect to an aza group, characterized in that the basic six-membered ring compounds are compounds of the formula I

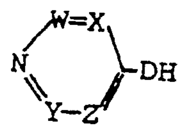

I

wherein

D is $(CH_2)_n$ with n equal to 2 to 30, wherein one or more $CH_2$ groups are replaced by $-C(R^1)=C(R^1)-$, $-C \equiv C-$, $-NR^1-$, $-O-$, $-CO-$, $-O-CO-$, $-CO-O-$, $-S-$, $-N=P(DR^1)2-$, two hetero atoms not being linked to each other by means of a single bond, $C_6$-$C_{18}$ aryldiyl and/or electron-rich heteroaryldiyl, in each case unsubstituted or substituted by $-R^1$, $-NR^1R^1$, $-OR^1$ or $-SR^1$,

or DH is OH, $NH_2$, SH, $C_6$-$C_{18}$ aryl and/or electronrich heteroaryl,

$R^1$ is, in each case independently of each other, H or $C_mH_{2m+1}$ with m equal to 1 to 30,

W, X, Y, Z are, in each case independently of each other, $CR^1$ or C-halogen, one or two of the radicals W, X, Y or Z, are, in each case independently of each other, also $CR^2$, N and/or P,

$R^2$ is $(CH_2)_n$ H with n equal to 2 to 30, wherein one or more CH2 groups may be replaced by $-C(R^1)=C(R^1)-$, $-C \equiv C-$, $-NR^1-$, $-O-$, $-CO-$, $-O-CO-$, $-CO-O-$, $-S-$, wherein two hetero atoms are not linked to each other, $C_6$-$C_{18}$ aryldiyl in each case unsubstituted or substituted by $-R^1$, $-NR^1R^1$, $-OR^1$ or $-SR^1$, or are acid addition salts of the basic compounds among these compounds a covalent bonding to a meth(acrylate)(sic) polymer matrix proceeding via a spacer if the attachment takes place at DH and DH denotes OH, $NH_2$ or SH.

2. Polymers according to claim 1, characterized in that the radicals of the compounds of the formula I are bonded to polymers which contain monomer units of the formula II

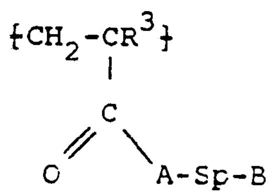

II

wherein

$R^3$ is H or methyl,

A is O or $NR^4$,

Sp is a single bond or a spacer

B is the radical of a compound of the formula I and

$R^4$ is H or $C_1$-$C_6$ alkyl.

3. Compositions, characterized by a content of polymers according to claim 1.

4. Use of the polymers according to claim 1 as nonlinear optical materials.

5. Use, as nonlinear optical materials, of compounds of the formula I with the definitions quoted, but wherein

$R^2$ is $(CH_2)_n$ with n equal to 2 to 30, wherein one or more CH2 groups may be replaced by $-C(R^1)=C(R^1)-$, $-C \equiv C-$, $-NR^5-$, $-O-$, $-CO-$, $-O-CO-$, $-CO-O-$, $-S-$, two hetero atoms not being linked to each other, $C_6$-$C_{18}$ aryldiyl in each case unsubstituted or substituted by $-R^1$, $-NR^1R^1$, $-OR^1$ or $-SR^1$, and

$R^5$ is $C_mH_{2m+1}$ with m equal to 1 to 30, with the proviso that

a) if X or Z are (sic) N, D has the meaning quoted in formula I but not that for the alternative DH, and

b) if W, X, Y and Z denote CH and two $CH_2$ groups of D are replaced by $-CH=CH-$, no $-CO$-groups must be present in an adjacent position to these two -CH=CH- groups, or acid addition salts of the basic compounds amomg these compounds.

6. Process for preparing polymer materials with nonlinear optical properties, characterized in that materials containing polymers according to claim 1 are aligned in a dipolar manner by applying an electric field.

7. Nonlinear optical system containing polymers according to claim 1.

8. Nonlinear optical system essentially consisting of a compound of the formula I with the definitions of claim 5 applied to a substrate.

**Revendications**

1. Polymères contenant, lié par covalence, le reste d'un composé à noyau hexagonal azoté, présentant en position 4 par rapport à un groupe aza des substituants donneurs comportant des électrons n ou $\pi$, caractérisés en ce que les composés à noyau hexagonal de base sont des composés de formule 1,

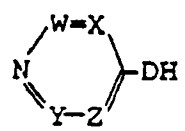

I

où

D représente $(CH_2)_n$ avec n valant 2-30, dans lequel l'un ou plusieurs des groupes $-CH_2$ sont remplacés par les groupes $-C(R^1)=C(R^1)-$, $-C\equiv C-$, $-NR^1-$, $-O-$, $-CO-$, $-O-CO-$, $-CO-O-$, $-S-$, $-N=P(DR^1)_2-$, où deux hétéroatomes ne sont pas reliés entre eux par une liaison simple, et suivant le cas un aryldiyle en $C_6$-$C_{18}$ et/ou un hétéroaryldiyle riche en électrons, non substitué ou substitué par $-NR^1$, $-NR^1R^1$, $-OR^1$ ou $-SR^1$,

ou DH représente OH, $NH_2$, SH, ou aryle et/ou hétéroaryle riche en électrons en $C_6$- $C_{18}$,

$R^1$ représentent, indépendamment l'un de l'autre, H ou $C_mH_{2m+1}$ avec m valant de 1 à 30,

W, X, Y, Z suivant le cas, indépendamment l'un de l'autre, représentent $CR^1$ ou C-halogène, tandis qu'un ou deux des restes W, X, Y ou Z représente(nt) éventuellement aussi, indépendamment l'un de l'autre, $CR^2$, N et/ou P,

$R^2$ représente $(CH_2)_nH$ avec n valant 2-30, où un ou plusieurs des groupes $-CH_2$ peuvent être remplacés par les groupes $-C(R^1)=C(R^1)-$, $-C\equiv C-$, $-NR^1-$, $-O-$, $-CO-$, $-O-CO-$, $-CO-O-$, $-S-$, où deux hétéroatomes ne sont pas reliés entre eux, et suivant le cas aryldiyle en $C_6$-$C_{18}$ non substitué ou substitué par $-R^1$, $-NR^1R^1$, $-OR^1$ ou $-SR^1$, ou des sels d'addition avec un acide des composés basiques parmi ceux-ci, tandis qu'un rattachement covalent à une matrice polymère de méth(acrylate) se fait au moyen d'un espaceur (spacer) dans le cas où le rattachement a lieu dans DH et où DH représente OH, $NH_2$ ou SH.

2. Polymères selon la revendication 1, caractérisés en ce que les restes des composés de formule I sont liés à des polymères qui contiennent les motifs monomères de formule II,

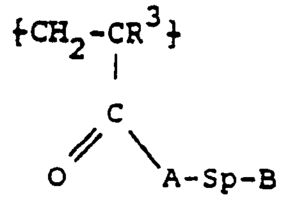

II

où

$R^3$ est H ou le groupe méthyle,

A est O ou $NR^4$,

Sp est une liaison simple ou un espaceur,

B est le reste d'un composé de formule I, et

$R^4$ est H ou un groupe alkyle en $C_1$-$C_6$.

3. Compositions, caractérisées en ce qu'elles comportent des polymères selon la revendication 1.

4. Utilisation des polymères selon la revendication 1 comme matières optiques non linéaires.

5. Utilisation des composés de formule I avec les définitions susdites, mais où

$R^2$ représente $(CH_2)_n$ avec n valant de 2 à 30, où un ou plusieurs des groupes $CH_2$ peuvent être remplacés

par les groupes $-C(R^1)=C(R^1)-$, $-C{\equiv}C-$, $-NR^5-$, $-O-$, $-CO-$, $-O-CO-$, $-CO-O-$, $-S-$, où deux hétéroatomes ne sont pas reliés entre eux, et suivant le cas aryldiyle en $C_6$-$C_{18}$ non substitué ou substitué par $-R^1$, $-NR^1R^1$, $-OR^1$ou $-SR^1$, et

$R^5$ représente $C_mH_{2m+1}$ avec m valant de 1 à 20, avec comme précision que

a) dans le cas où X ou Z sont N, D a la signification indiquée dans la formule I, mais pas pour l'alternative DH, et

b) dans le cas où W, X, Y et Z sont CH et où deux groupes $CH_2$ de D sont remplacés par $-CH=CH-$, il ne doit y avoir aucun groupe $-CO-$ au voisinage de ces deux groupes $-CH=CH-$, ou des sels d'addition avec un acide des composés basiques parmi ceux-ci, comme matières optiques non linéaires.

6. Procédé pour la préparation de matières polymères ayant des propriétés optiques non linéaires, caractérisé en ce qu'on oriente en dipôle des matières contenant des polymères selon la revendication 1, en appliquant un champ électrique.

7. Dispositif optique non linéaire, caractérisé en ce qu'il contient des polymères selon la revendication 1.

8. Dispositif optique non linéaire, caractérisé en ce qu'il consiste pour l'essentiel en un composé de formule I déposé sur un substrat, avec les définitions de la revendication 5.